# EUROPEAN PATENT SPECIFICATION

(11) **EP 3 972 199 B1**
(45) Date of publication and mention of the grant of the patent: **03.07.2024**
(21) Application number: 21784455.4
(22) Date of filing: 01.02.2021
(51) Int. Cl.: H04L 41/28, H04L 41/022, G06F 21/10, G06F 21/12, H04L 9/40, H04L 67/51

(54) **OPEN INTERFACE MANAGEMENT METHOD, ELECTRONIC DEVICE, AND STORAGE MEDIUM**
VERFAHREN ZUR VERWALTUNG EINER OFFENEN SCHNITTSTELLE, ELEKTRONISCHE VORRICHTUNG UND SPEICHERMEDIUM
PROCÉDÉ DE GESTION D'INTERFACE OUVERTE, DISPOSITIF ÉLECTRONIQUE ET SUPPORT D'ENREGISTREMENT

(30) Priority: 08.04.2020 CN 202010269380
(43) Date of publication of application: 23.03.2022
(73) Proprietor: ZTE Corporation, Shenzhen, Guangdong 518057 (CN)
(72) Inventor: GUO, Hua, Shenzhen, Guangdong 518057 (CN)
(74) Representative: Osterhoff, Utz
(86) International application number: PCT/CN2021/074704
(87) International publication number: WO 2021/203817

(56) References cited:
- WO-A1-2009/046674
- CN-A- 101 400 109
- CN-A- 103 049 271
- CN-A- 105 224 298
- CN-A- 107 517 177
- CN-A- 109 492 358
- CN-A- 110 968 626
- US-A1- 2006 200 419
- US-A1- 2014 244 803
- US-A1- 2019 068 612
- US-B2- 7 051 324

## Description

### TECHNICAL FIELD

The embodiments of the present disclosure relate to the field of communication technology, and in particular to an open interface management method, an electronic device, and a storage medium.

### BACKGROUND

In the 5th generation mobile communication technology (5G) era, the telecommunication industry is facing increasing requirements on opening. An operation and maintenance center (OMC) system of a telecommunication device provider has to provide open interfaces to operators and third parties.

The OMC system of the telecommunication device provider is provided to the entire world. Although the system includes open interfaces that are universal sets, one operator can only employ a part of open interfaces which are provided and designated by a set of OMC system after the set of OMC system is deployed at the operator. Therefore, in open interface management, authorization of the open interfaces has to be well controlled. Currently, an authorization management solution of a common open interface is license control. The telecommunication device provider provides an operator A only with a license. The operator can employ the license to access an interface a, but can by no means access an interface other than the interface a in the OMC system.

However, the inventor finds that with an increasing number of open interfaces in the OMC system, dynamic registration of the open interfaces becomes impossible to implemented under the license management mechanism, and, a high cost of management on operation and maintenance of the open interfaces is caused due to the heavy workload in configuration and authorization management on every open interface.

WO2009046674A1 discloses a USI system. Said system comprises the service function interface and the policy control engine. Said service function interface receives the interface registration request of the service entity in CSN and stores the open interface information in said registration request. Said policy control engine receives the interface calling request and inquires whether service function interface stores the open interface information corresponding to the interface calling request; after the open interface information is obtained by inquiring, said policy control engine sends the interface calling request to the corresponding service entity in CSN. By employing said system, the open capability of WiMAX network is greatly improved and the function requirement for USI system is reduced.

### SUMMARY

Embodiments of the present disclosure aim to provide an open interface management method, an electronic device, and a storage medium that can reduce cost of management on operation and maintenance of an open interface.

In order to address the technical problem described in the above, some embodiments of the present disclosure provide an open interface management method, applied in a device where an OMC system is deployed, including: receiving a registration request configured to request registration of a target open interface and the registration request carrying an attribute of the target open interface; determining a type of the target open interface with a preset classification manner according to the attribute of the target open interface carried in the registration request, and acquiring an open interface model package corresponding to the type, the open interface model package is pre-established and stored in the OMC system, includes the registration file of the open interface of the corresponding type and is applied to registration of the open interface; acquiring an authentication file corresponding to the open interface model package, and authenticating the registration request according to the authentication file, the authentication file is generated based on an authorized item file matching an open interface model package of each type after the establishment of the open interface model package; and registering the target open interface at an application programming interface (API) gateway according to the registration file included in the open interface model package in response to a passed authentication.

Some embodiments of the present disclosure further provide an open interface management method, including: acquiring registration files of open interfaces of varied types, and establishing an open interface model package for each type according to the registration files of the open interfaces of the varied types; and generating an authorized item description file matching the open interface model package, the authorized item description file is used for generating the authentication file corresponding to the open interface model package.

Some embodiments of the present disclosure further provide an electronic device including: at least one processor; and a memory in communication connection with the at least one processor, the memory stores an instruction executable by the least one processor, and when the instruction is executed by the least one processor, the at least one processor implements the open interface management method as described in the above.

Some embodiments of the present disclosure further provide a computer-readable storage medium, storing a computer program that, when executed by a processor, implements the open interface management method as described in the above.

### BRIEF DESCRIPTION OF THE DRAWINGS

One or more embodiments are exemplarily described with reference to the corresponding appended drawings. The exemplary description does not constitute a limitation to the embodiments.
FIG. 1 is a schematic flow chart of an open interface management method according to Embodiment 1 of the present disclosure.
FIG. 2 is a schematic diagram showing a structure of an OMC system according to Embodiment 1 of the present disclosure.
FIG. 3 is a schematic flow chart of an open interface management method according to Embodiment 2 of the present disclosure.
FIG. 4 is a schematic diagram showing establishment of an open interface model package and an authorized item description file by using a continuous integration (CI) pipe line according to Embodiment 2 of the present disclosure.
FIG. 5 is a schematic flow chart of an open interface management method according to Embodiment 3 of the present disclosure.
FIG. 6 is a schematic flow chart of an open interface management method according to Embodiment 4 of the present disclosure.
FIG. 7 is a schematic diagram showing a structure of an electronic device according to Embodiment 5 of the present disclosure.

### DETAILED DESCRIPTION

The embodiments of the present disclosure will be described in detail below with reference to the accompanying drawings in order to make the objectives, technical solutions and advantages of the present invention clearer. However, it will be apparent to those skilled in the art that, in the various embodiments of the present invention, numerous technical details are set forth in order to provide the reader with a better understanding of the present disclosure. However, the technical solutions claimed in the present disclosure can be implemented without these technical details and various changes and modifications based on the following embodiments.

Embodiment 1 of the present disclosure relates to an open interface management method, including: receiving a registration request configured to request registration of a target open interface; determining a type of the target open interface, and acquiring an open interface model package corresponding to the type, the open interface model package including a registration file of an open interface of the type; acquiring an authentication file corresponding to the open interface model package, and authenticating the registration request according to the authentication file; and registering the target open interface at an application programming interface (API) gateway according to the registration file included in the open interface model package in response to a passed authentication. With this embodiment, cost of management on operation and maintenance of an open interface can be reduced. In the following, implementation details of the open interface management method according to the present embodiment are described. The following content is directed to facilitate understanding implementation details provided, but this solution is not limited to the following content.

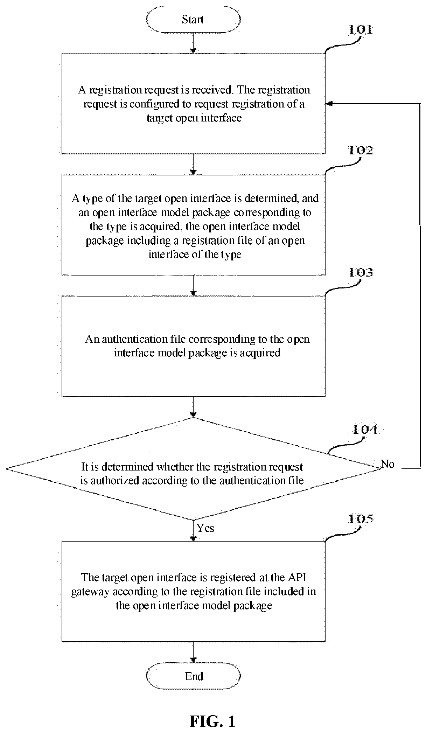

In this embodiment, the open interface management method is shown in FIG.1.

In step 101, a registration request is received. The registration request is configured to request registration of a target open interface.

Specifically, a device where an OMC system is deployed receives the registration request. A transmitting end of the registration request is an operator or a third party. The registration request is configured to request registration of the target open interface. The registration request carries an attribute of the target open interface, for example, an applicable operator of the target open interface, a specific parameter of the target open interface, or the like.

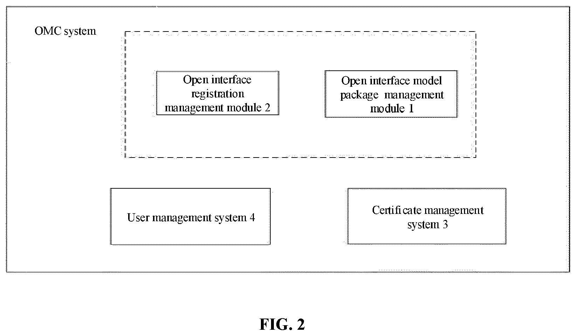

Herein, the OMC system deployed in the device is provided together with the open interface by a device provider. A structure of the OMC system during implementation is shown in FIG. 2. The OMC system includes an open interface model management module 1, an open interface registration management module 2, a certificate management system 3 and a user management system 4. In this step, the open interface registration management module 2 receives and processes the registration request.

In step 102, a type of the target open interface is determined, and an open interface model package corresponding to the type is acquired, the open interface model package includes a registration file of an open interface of the type.

Specifically, determining the type of the target open interface includes determining a type of the target open interface with a preset classification manner according to the attribute of the target open interface carried in the registration request. For example, the preset classification manner lies in performing classification according to applicable operators (such as a general open interface type, an operator A dedicated interface type, an operator B dedicated interface type, and the like) of an open interface. And according to the attribute of the target open interface, the target open interface is an operator A dedicated interface. Therefore, it is determined that a type of the target open interface is the operator A dedicated interface type. Then the open interface model package corresponding to the target open interface is acquired according to the type of the target open interface. The open interface model package is pre-established and stored in the OMC system, including the registration file of the open interface of the corresponding type. The registration file is applied to registration of the open interface.

In step 103, the authentication file corresponding to the open interface model package is acquired.

Specifically, after the OMC system acquires an open interface model package corresponding to the registration request, authentication has to be performed on the registration request. In this embodiment, the registration request is authenticated by acquiring the authentication file corresponding to the open interface model package. The authentication file is generated based on an authorized item file matching an open interface model package of each type after the establishment of the open interface model package. In the OMC system as shown in FIG. 2, the authentication file is stored in a certificate management system. After the open interface registration management module acquires a corresponding open interface model package, the certificate management system performs authentication on the registration request.

In step 104, it is determined whether the registration request is authorized according to the authentication file. In response to the registration request being authorized, step 105 is performed. In response to the registration request being not authorized, step 101 is performed.

Specifically, authentication is performed on the registration request according to the authentication file. In response to the authentication on the registration request being passed, a next step is performed, and registration of the open interface is performed. In response to the authentication on the registration request being not passed, it is determined that the registration request received is invalid, and no registration of the open interface is performed.

In step 105, the target open interface is registered at the API gateway according to the registration file included in the open interface model package.

Specifically, in response to the authentication on the registration request being passed, the target open interface is registered at the API gateway according to the registration file included in the open interface model package.

In this embodiment, compared with the related technologies, a registration request configured to request registration of a target open interface is received, a type of the target open interface is determined, and an open interface model package corresponding to the type is acquired, the open interface model package includes a registration file of an open interface of the type. The authentication file corresponding to the open interface model package is acquired, and authentication is performed on the registration request according to the authentication file. In response to the authentication on the registration request being passed, the target open interface is registered at the API gateway according to the registration file included in the open interface model package. Primarily, by acquiring the pre-established open interface model package that includes the registration file of the open interface upon receiving an open interface registration request, and by performing authorization management and registration of the open interface based on the open interface model package, the OMC system is able to support dynamic registration of the open interface when performing open interface management. In this way, flexibility of the open interface management performed by the OMC system can be improved. Secondarily, by determining the open interface model package corresponding to the type of the open interface, and by performing open interface management based on the open interface model package, the OMC system can perform open interface management with a greater granularity. In this way, workload in management on each open interface can be reduced, and thereby the cost of management on operation and maintenance of the open interface can be reduced.

It shall be noted that after step 105, the following step may further be performed: establishing a role and operation instruction set for a user initiating the registration request. Specifically, establishing the role and operation instruction set for the user (the operator or the third party) initiating the registration request can facilitate the operation of the open interface by the user in the use of the open interface subsequent to the registration of the open interface. In the OMC system as shown in FIG. 2, this step is specifically performed as: establishing the role and operation instruction set for a user in a user management system.

It shall be noted that in this embodiment, the open interface model package is decoupled from the OMC system deployed in a server. The open interface model package may be issued along with versions of the OMC system, or may be issued independent of the versions of the OMC system. Therefore, the open interface model package is not necessarily updated in synchronization with the updating of versions of the OMC system. In this way, workload in open interface management can be reduced and flexibility of open interface management can be improved, as compared with the related technologies where configuration of each open interface has to be updated in synchronization with each updating of the version of the OMC system.

Embodiment 2 of the present disclosure relates to an open interface management method. Embodiment 2 is an improvement of Embodiment 1 in that: in Embodiment 2, before the step of receiving the registration request, the method includes steps of establishing the open interface model package and generating an authorized item description file matching the open interface model package.

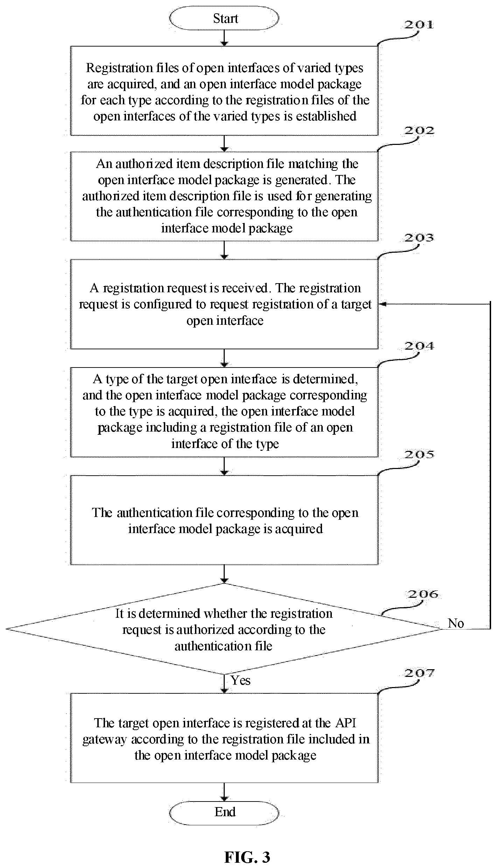

In this embodiment, as shown in FIG. 3, the open interface management method includes the following.

In step 201, registration files of open interfaces of varied types are acquired, and an open interface model package for each type according to the registration files of the open interfaces of the varied types is established.

Specifically, skilled persons who operate the OMC system develop registration files of open interfaces. During the development, all the open interfaces are classified according to the preset classification manner (the classification manner may be determined according to specific user requirement or market requirement), and the registration files of the open interfaces of varied types are submitted to the device where the OMC system is deployed. After acquiring the registration files, the device establishes open interface model packages of each type according to the registration files, so that the open interface models are able to support registration of the open interfaces.

In step 202, an authorized item description file matching the open interface model package is generated. The authorized item description file is used for generating the authentication file corresponding to the open interface model package.

Specifically, after establishing the open interface model package, the device where the OMC system is deployed further generates the authorized item description file corresponding to the open interface model package. The authorized item description file is used for generating the authentication file corresponding to the open interface model package. In this way, the system is able to perform authentication on a registration request corresponding to the open interface model package. Herein, the authorized item description file is exemplarily defined as shown in Table 1.

**Table 1**

| Definition of authorized item for License | Type of authorized item | Description on authorized item |
|---|---|---|
| OPENAPI_ALL_LICENSE_FUNCITION | SWITCH | Authorized item for OPENAPI general interface |

In this embodiment, after generating the authorized item description file, the OMC system may generate the authentication file corresponding to the open interface model package based on the authorized item description file. In a specific application scenario, the OMC system may generate a License file as the authentication file by inputting the authorized item description file into a License production tool.

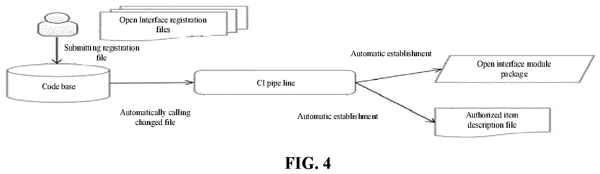

It shall be noted that in the process of establishing the open interface model package in step 201 and in the process of generating the authorized item description file in step 202, automation is implemented by using a continuous integration (CI) pipe line. As shown in FIG. 4, after a developer submits a registration file to a code base, the CI pipe line automatically calls an acquired registration file from the code base, establishes the open interface model package and generates the authorized item description file. In this way, efficiency of open interface management can be greatly improved.

In step 203, the registration request is received. The registration request is configured to request registration of the target open interface.

In step 204, the type of the target open interface is determined, and the open interface model package corresponding to the type is acquired, the open interface model package including the registration file of the open interface of the type.

In step 205, the authentication file corresponding to the open interface model package is acquired.

In step 206, it is determined whether the registration request is authorized according to the authentication file. In response to the registration request being authorized, step 207 is performed. In response to the registration request being not authorized, step 203 is performed.

In step 207, the target open interface is registered at the API gateway according to the registration file included in the open interface model package.

Steps 203 to 207 are generally identical to steps 101 to 105 in Embodiment 1, respectively, and are not repeated here to avoid duplication.

Compared with Embodiment 1, in this embodiment, the device where the OMC system is deployed further establishes the open interface model package and generates the authorized item description file matching the open interface model package, including: registration files of open interfaces of varied types are acquired, and an open interface model package for each type is established according to the registration files of the open interfaces of the varied types; the authorized item description file matching the open interface model package is generated. The authorized item description file is used for generating the authentication file corresponding to the open interface model package. Establishing the corresponding open interface model package and generating the matching authorized item description file according to the types of the open interfaces provides a basis for the OMC system to perform registration of the open interfaces based on the open interface model package and perform management on authorization of the open interfaces based on the authorized item description file matching the open interface model package.

Embodiment 3 of the present disclosure relates to an open interface management method. Embodiment 3 is an improvement of Embodiment 1 in that: in Embodiment 3, before the step of receiving the registration request, the method includes a step of importing the open interface model package.

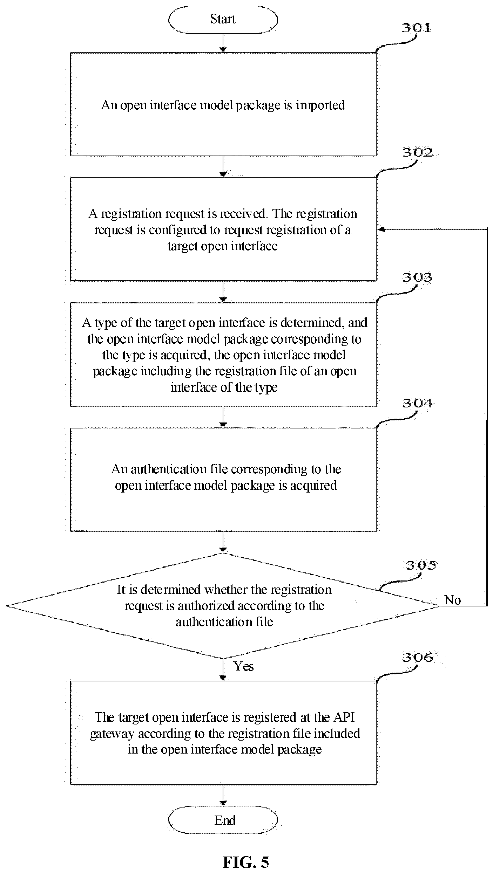

The open interface management method in this embodiment is shown in FIG. 5, including the following steps.

In step 301, the open interface model package is imported.

Specifically, the device where the OMC system is deployed updates an open interface model package base in the OMC system by importing the open interface model package. Besides, for an OMC system that includes no open interface model package, an open interface model package base of the OMC system may be initialized by importing the open interface model package.

In this embodiment, for the imported open interface model package, the OMC system first checks integrality of the open interface model package. In response to a passed checking, the model package is decompressed to acquire the registration file included in the open interface model package, and the registration file is persistently stored. In addition, the OMC system may delete a discarded open interface model package in the OMC system. In this way, an open interface model package file in the OMC system can be extended and updated in real time, thereby flexibility of the open interface management performed by the OMC system can be improved.

In step 302, the registration request is received. The registration request is configured to request for registration of the target open interface.

In step 303, the type of the target open interface is determined, and the open interface model package corresponding to the type is acquired, the open interface model package including the registration file of the open interface of the type.

In step 304, the authentication file corresponding to the open interface model package is acquired.

In step 305, it is determined whether the registration request is authorized according to the authentication file. In response to the registration request being authorized, step 306 performed. In response to the registration request being not authorized, step 302 performed.

In step 306, the target open interface is registered at the API gateway according to the registration file included in the open interface model package.

Steps 302 to 306 are generally identical to steps 101 to 105 in Embodiment 1, respectively, and are not repeated here to avoid duplication.

Compared with Embodiment 1, in this embodiment, the open interface model package is imported before receiving the registration request. By importing the open interface model package, the open interface model package base of the OMC system can be initialized, or the open interface model package file in the OMC system can be extended and updated in real time. In this way, flexibility of the open interface management performed by the OMC system can be improved.

Embodiment 4 of the present disclosure relates to an open interface management method, including: acquiring registration files of open interfaces of varied types, and establishing an open interface model package for each type according to the registration files of the open interfaces of the varied types; and generating an authorized item description file matching the open interface model package.

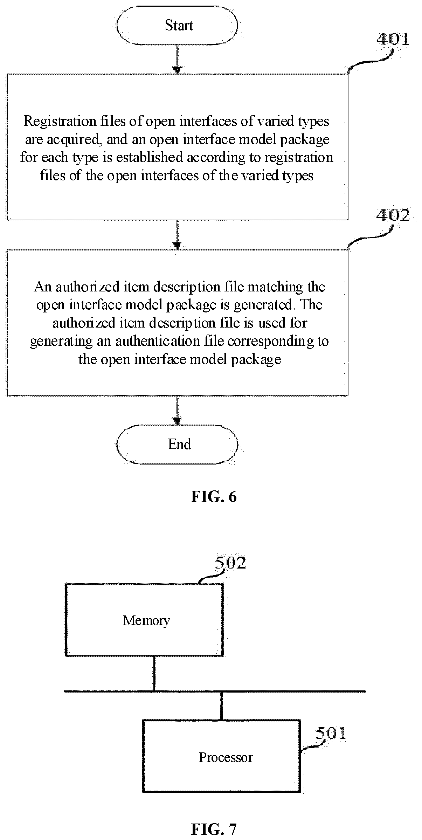

The open interface management method in this embodiment is shown in FIG. 6, including the following steps.

In step 401, the registration files of the open interfaces of the varied types are acquired, and the open interface model package for each type is established according to the registration files of the open interfaces of the varied types.

Specifically, skilled persons who operate the OMC system develop registration files of open interfaces. During the development, all the open interfaces are classified according to the preset classification manner (the classification manner may be determined according to specific user requirement or market requirement), and the registration files of the open interfaces of varied types are submitted to the server. After acquiring the registration files, the server establishes open interface model packages of each type according to the registration files, so that the open interface models are able to support registration of the open interfaces.

In step 202, an authorized item description file matching the open interface model package is generated. The authorized item description file is used for generating the authentication file corresponding to the open interface model package.

Specifically, after establishing the open interface model package, the server further generates the authorized item description file corresponding to the open interface model package. The authorized item description file is used for generating the authentication file corresponding to the open interface model package. In this way, the OMC system is able to perform authentication on a registration request corresponding to the open interface model package. In this embodiment, the server may generate the authentication file corresponding to the open interface model package according to the authorized item description file matching the open interface model package.

It is noted that in this embodiment, step 401, i.e. a process of establishing the open interface model package and step 402, i.e. a process of generating the authorized item description file are similar to steps 201 and 202 in Embodiment 2, automation also may be implemented by using the CI pipe line.

It shall be noted that this embodiment may be implemented not only by the device where the OMC system is deployed, but also by another electronic device where no OMC system is deployed (this electronic device shall have the computing capability of establishing an open interface model package and generating an authorized item description file). After establishing the open interface model package and generating the authorized item description file, the open interface model package and the authorized item description file is imported into the device where the OMC system is deployed, so that the device where the OMC system is deployed may perform open interface management.

Compared with related technologies, in this embodiment, the registration files of the open interfaces of the varied types are acquired, and the open interface model package for each type is established according to the registration files of the open interfaces of the varied types; an authorized item description file matching the open interface model package is generated; the authorized item description file is used for generating the authentication file corresponding to the open interface model package. By establishing an open interface model package and an authorized item description file matching the open interface model package based on a type of an open interface and by providing the established open interface model package and the authorized item description file to an OMC system, the OMC system may perform registration of the open interface based on the open interface model package and may perform management on authorization of the open interface based on the authorized item description file matching the open interface model package. In this way, the OMC system can perform registration and management on authorization of the open interface with a greater granularity, thereby the efficiency of the open interface management can be improve.

Division of the steps in the above methods means to make the description clearer. In implementation, the steps may be combined into one or some steps may be further divided into multiple steps. All these fall into the protection scope of the present disclosure as long as consistent logic relationships are included. A trivial amendment or design added to but not changing algorithms or processes in the present disclosure falls into the protection scope of the present disclosure.

Embodiment 5 of the present disclosure relates to an electronic device. As shown in FIG. 7, the electronic device includes at least one processor 501, and a memory 502 in communication connection with the at least one processor 501. Herein, the memory 502 stores an instruction executable by the least one processor 501, and the instruction is executed by the least one processor 501 so that the at least one processor 501 is able to implement the open interface management method according to any one of the above method embodiments.

Herein, the memory 502 and the at least one processor 501 are connected through a bus. The bus may include interconnected buses and bridges of a random number. The bus connects one or more processors 501 with various circuits of the memory 502. The bus may further connect various other circuits such as a peripheral device, a regulator, a power management circuit, and the like. These are common knowledge in the art and thus are not further described. A bus interface provides an interface between the bus and a transceiver. The transceiver may be one element or multiple elements like multiple receivers and transmitters providing units for communicating with various other apparatuses through a transmission medium. Data processed by a processor 501 is transmitted through an antenna on a wireless medium. In this embodiment, the antenna further receives data and transmits the data to the processor 501.

The processor 501 is responsible for managing the bus and general processing, and may provide various functions such as timing, management on a peripheral interface, voltage adjustment, management on power supply, and other control functions. The memory 502 may be used to store data used by the processor 501 upon performing an operation.

Embodiment of the present disclosure also provides a computer-readable storage medium storing a computer program. When executed by a processor, the computer program implements the open interface management method according to any one of the above method embodiments.

That is, those skilled in the art may understand that all or some steps in the methods of the above embodiments may be implemented through related hardware instructed by a program. The program is stored in one storage medium, including a number of instructions that enable one device (which may be a single-chip microcomputer or a chip) or processor to perform all or some steps in the methods of the above embodiments. The storage medium may be a medium such as a universal serial bus disk, a mobile hard disc, a read-only memory (ROM), a random access memory (RAM), a magnetic disc or an optical disc that may store program codes.

Those of ordinary skill in the art may understand that the above embodiments are specific embodiments for implementing the present disclosure.

## Claims

1. An open interface management method, applied in a device where an Operation and Maintenance Center, OMC, system is deployed, **characterized by** comprising:
receiving (101) a registration request configured to request registration of a target open interface and the registration request carrying an attribute of the target open interface;
determining (102) a type of the target open interface with a preset classification manner according to the attribute of the target open interface carried in the registration request, and acquiring an open interface model package corresponding to the type, wherein the open interface model package is pre-established and stored in the OMC system, includes a registration file of the
open interface of the corresponding type and is applied to registration of the open interface;
acquiring (103) an authentication file corresponding to the open interface model package, and authenticating the registration request according to the authentication file, wherein the authentication file is generated based on an authorized item file matching an open interface model package of each type after the establishment of the open interface model package; and
registering (105) the target open interface at an application programming interface, API, gateway according to the registration file comprised in the open interface model package in response to a passed authentication.

2. The open interface management method according to claim 1, before receiving the registration request, further comprising:
acquiring (201) registration files of open interfaces of varied types, and establishing an open interface model package for each type according to the registration files of the open interfaces of the varied types; and
generating (202) an authorized item description file matching the open interface model package, the authorized item description file is used for generating the authentication file corresponding to the open interface model package.

3. The open interface management method according to claim 2, wherein
establishing the open interface model package for each type according to the registration files of the open interfaces of the varied types comprises:
establishing the open interface model package for each type according to the registration files of the open interfaces of the varied types by using a continuous integration, CI, pipe line; and
generating the authorized item description file matching the open interface model package comprises:
generating the authorized item description file matching the open interface model package by using the CI pipe line.

4. The open interface management method according to claim 2, after generating the authorized item description file matching the open interface model package, further comprising:
generating the authentication file corresponding to the open interface model package according to the authorized item description file matching the open interface model package.

5. The open interface management method according to claim 1, before receiving the registration request, further comprising:
importing (301) the open interface model package.

6. The open interface management method according to claim 5, after importing a new open interface model package, further comprising:
checking integrality of the new open interface model package; and
performing persistent storage on a registration file comprised in the new open interface model package, in response to a passed checking.

7. The open interface management method according to claim 1, after registering the target open interface at the API gateway, further comprising:
establishing a role and operation instruction set for a user initiating the registration request.

8. An electronic device, comprising:
at least one processor; and
a memory in communication connection with the at least one processor,
the memory stores an instruction executable by the least one processor, and when the instruction is executed by the least one processor, the at least one processor implements the open interface management method according to any one of claims 1-7.

9. A computer-readable storage medium, storing a computer program that, when executed by a processor, implements the open interface management method according to any one of claims 1-7.

## Patentansprüche

1. Verfahren zur Verwaltung einer offenen Schnittstelle, das in einer Vorrichtung angewandt wird, in der ein Betriebs- und Wartungszentrumssystem (OMC) eingesetzt wird, **dadurch gekennzeichnet, dass** es Folgendes umfasst:
Empfangen (101) einer Registrierungsanforderung, die konfiguriert ist, um die Registrierung einer offenen Zielschnittstelle anzufordern, wobei die Registrierungsanforderung ein Attribut der offenen Zielschnittstelle trägt;
Bestimmen (102) eines Typs der offenen Zielschnittstelle mit einer voreingestellten Klassifizierungsweise gemäß dem Attribut der offenen Zielschnittstelle, das in der Registrierungsanforderung getragen ist, und Erfassen eines offenen Schnittstellenmodellpakets, das dem Typ entspricht, wobei das offene Schnittstellenmodellpaket im Voraus erstellt, in dem OMC-System gespeichert wird, eine Registrierungsdatei der offenen Schnittstelle des entsprechenden Typs enthält und auf die Registrierung der offenen Schnittstelle angewendet wird;
Erfassen (103) einer Authentifizierungsdatei, die dem offenen Schnittstellenmodellpaket entspricht, und Authentifizieren der Registrierungsanforderung gemäß der Authentifizierungsdatei, wobei die Authentifizierungsdatei auf der Grundlage einer autorisierten Artikeldatei erzeugt wird, die mit einem offenen Schnittstellenmodellpaket jedes Typs nach der Einrichtung des offenen Schnittstellenmodellpakets übereinstimmt; und
Registrieren (105) der offenen Zielschnittstelle an einer Anwendungsprogrammierschnittstelle, API, Gateway gemäß der im offenen Schnittstellenmodellpaket enthaltenen Registrierungsdatei als Reaktion auf eine bestandene Authentifizierung.

2. Verfahren zur Verwaltung einer offenen Schnittstelle nach Anspruch 1, vor dem Empfang der Registrierungsanforderung, ferner umfassend:
Erfassen (201) von Registrierungsdateien offener Schnittstellen verschiedener Typen und Erstellen eines Schnittstellenmodellpakets für jeden Typ gemäß den Registrierungsdateien der offenen Schnittstellen verschiedener Typen; Und
Erzeugen (202) einer autorisierten Artikelbeschreibungsdatei, die mit dem offenen Schnittstellenmodellpaket übereinstimmt, wobei die autorisierte Artikelbeschreibungsdatei zum Erzeugen der Authentifizierungsdatei verwendet wird, die dem offenen Schnittstellenmodellpaket entspricht.

3. Verfahren zur Verwaltung einer offenen Schnittstelle nach Anspruch 2, wobei
das Erstellen eines Schnittstellenmodellpakets für jeden Typ gemäß den Registrierungsdateien der offenen Schnittstellen verschiedener Typen umfasst:
Erstellen eines Schnittstellenmodellpakets für jeden Typ gemäß den Registrierungsdateien der offenen Schnittstellen verschiedener Typen unter Verwendung einer Pipeline für kontinuierliche Integration (CI); und
das Erzeugen einer autorisierten Artikelbeschreibungsdatei, die mit dem offenen Schnittstellenmodellpaket übereinstimmt, umfasst:
Erzeugen einer autorisierten Artikelbeschreibungsdatei, die mit dem offenen Schnittstellenmodellpaket übereinstimmt, unter Verwendung einer Pipeline für kontinuierliche Integration (CI).

4. Verfahren zur Verwaltung offener Schnittstellen nach Anspruch 2, wobei nach dem Erzeugen einer autorisierten Artikelbeschreibungsdatei, die mit dem offenen Schnittstellenmodellpaket übereinstimmt, umfasst:
Erzeugen der Authentifizierungsdatei, die dem offenen Schnittstellenmodellpaket entspricht, gemäß der autorisierten Artikelbeschreibungsdatei, die mit dem offenen Schnittstellenmodellpaket übereinstimmt.

5. Verfahren zur Verwaltung einer offenen Schnittstelle nach Anspruch 1, vor dem Empfang der Registrierungsanforderung, ferner umfassend:
Importieren (301) des offenen Schnittstellenmodellpakets.

6. Verfahren zur Verwaltung einer offenen Schnittstelle nach Anspruch 5, nach dem Importieren des neuen offenen Schnittstellenmodellpakets, ferner umfassend:
Überprüfen der Integrität des neuen offenen Schnittstellenmodellpakets; Und
Durchführen einer dauerhaften Speicherung einer im neuen offenen Schnittstellenmodellpaket enthaltenen Registrierungsdatei als Reaktion auf eine bestandene Prüfung.

7. Verfahren zur Verwaltung offener Schnittstellen nach Anspruch 1, nach der Registrierung der offenen Zielschnittstelle am API-Gateway, ferner umfassend die folgenden Schritte:
Erstellen einer Rolle und eines Betriebsanweisungssatzes für einen Benutzer, der die Registrierungsanforderung initiiert.

8. Elektronisches Gerät, das Folgendes umfasst:
mindestens einen Prozessor; und
einen Speicher, der in Kommunikationsverbindung mit dem mindestens einen Prozessor steht,
wobei der Speicher eine Anweisung speichert, die von dem mindestens einen Prozessor ausgeführt werden kann, und wobei, wenn die Anweisung von dem mindestens einen Prozessor ausgeführt wird, der mindestens ein Prozessor das Verfahren zur Verwaltung der offenen Schnittstelle nach einem der Ansprüche 1 bis 7 implementiert.

9. Computerlesbares Speichermedium, das ein Computerprogramm speichert, das, wenn es von einem Prozessor ausgeführt wird, das Verfahren zur Verwaltung der offenen Schnittstelle nach einem der Ansprüche 1 bis 7 implementiert.

## Revendications

1. Procédé de gestion d'interfaces ouvertes, applicable dans un équipement dans lequel est déployé un système de centre d'exploitation et de maintenance, OMC, **caractérisé en ce qu'**il comprend :
recevoir (101) une demande d'enregistrement configurée pour demander un enregistrement d'une interface ouverte cible et la demande d'enregistrement véhiculant un attribut de l'interface ouverte cible ;
déterminer (102) un type de l'interface ouverte cible d'une manière de classification prédéfini en fonction de l'attribut de l'interface ouverte cible véhiculé dans la demande d'enregistrement, et acquérir un package de modèle d'interface ouverte correspondant au type, dans lequel le package de modèle d'interface ouverte est préétabli et stocké dans le système OMC, comprend un fichier d'enregistrement de l'interface ouverte du type correspondant et est appliqué à l'enregistrement de l'interface ouverte ;
acquérir (103) un fichier d'authentification correspondant au package de modèle d'interface ouverte, et authentifier la demande d'enregistrement en fonction du fichier d'authentification, dans lequel le fichier d'authentification est généré sur la base d'un fichier d'élément autorisé correspondant à un package de modèle d'interface ouverte de chaque type après l'établissement du package de modèle d'interface ouverte ; et
enregistrer (105) l'interface ouverte cible sur un passerelle d'interface de programmation d'application, API, en fonction du fichier d'enregistrement contenu dans le package de modèle d'interface ouverte en réponse à une authentification réussie.

2. Procédé de gestion d'interfaces ouvertes selon la revendication 1, avant l'étape de recevoir une demande d'enregistrement, comprenant en outre :
acquérir (201) de fichiers d'enregistrement d'interfaces ouvertes de divers types et établir un package de modèle d'interface ouverte pour chaque type en fonction des fichiers d'enregistrement des interfaces ouvertes de divers types ; et
générer (202) un fichier de description d'élément autorisé correspondant au package de modèle d'interface ouverte, le fichier de description d'élément autorisé étant utilisé pour générer le fichier d'authentification correspondant au package de modèle d'interface ouverte.

3. Procédé de gestion d'interfaces ouvertes selon la revendication 2, dans lequel
l'étape d'établir le package de modèle d'interface ouverte pour chaque type en fonction des fichiers d'enregistrement des interfaces ouvertes de divers types comprend :
établir le package de modèle d'interface ouverte pour chaque type en fonction des fichiers d'enregistrement des interfaces ouvertes de divers types en utilisant un pipeline d'intégration continue CI ; et
l'étape de générer le fichier de description d'élément autorisé correspondant au package de modèle d'interface ouverte comprend :
générer le fichier de description d'élément autorisé correspondant au package de modèle d'interface ouverte en utilisant un pipeline CI.

4. Procédé de gestion d'interfaces ouvertes selon la revendication 2, après l'étape de générer le fichier de description d'élément autorisé correspondant au package de modèle d'interface ouverte, comprenant en outre :
générer le fichier d'authentification correspondant au package de modèle d'interface ouverte en fonction du fichier de description d'élément autorisé correspondant au package de modèle d'interface ouverte.

5. Procédé de gestion d'interfaces ouvertes selon la revendication 1, avant l'étape de recevoir une demande d'enregistrement, comprenant en outre :
importer (301) le package de modèle d'interface ouverte.

6. Procédé de gestion d'interfaces ouvertes selon la revendication 5, après l'étape de importer un nouveau package de modèle d'interface ouverte, comprenant en outre :
vérifier l'intégralité du nouveau package de modèle d'interface ouverte ; et
effectuer un stockage persistant sur un fichier d'enregistrement contenu dans le nouveau package de modèle d'interface ouverte, en réponse à une vérification réussie.

7. Procédé de gestion d'interfaces ouvertes selon la revendication 1, après l'étape d'enregistrer l'interface ouverte cible sur le passerelle API, comprenant en outre :
établir un rôle et un jeu d'instructions d'opération pour un utilisateur initier la demande d'inscription.

8. Équipement électronique, comprenant :
au moins un processeur ; et
une mémoire en communication avec l'au moins un processeur,
la mémoire stocke une instruction exécutable par l'au moins un processeur, et lorsque l'instruction est exécutée par l'au moins un processeur, l'au moins un processeur met en oeuvre le procédé de gestion d'interfaces ouvertes selon l'une quelconque des revendications 1 à 7.

9. Support de stockage lisible par ordinateur, stockant un programme informatique qui, lorsqu'il est exécuté par un processeur, met en oeuvre le procédé de gestion d'interfaces ouvertes selon l'une quelconque des revendications 1 à 7.
